# EUROPEAN PATENT SPECIFICATION

(11) **EP 2 389 420 B1**
(45) Date of publication and mention of the grant of the patent: **30.04.2014**
(21) Application number: 10703144.5
(22) Date of filing: 25.01.2010
(51) Int. Cl.: C09D 11/10

(54) **UV CURABLE INK FOR A PLASTIC GLAZING SYSTEM**
UV HÄRTBARE TINTE FÜR KUNSTSTOFFVERGLASUNGSSYSTEME
ENCRE DURCISSABLE AUX UV POUR UN SYSTÈME DE VITRAGE PLASTIQUE

(30) Priority: 26.01.2009 US 147142 P
(43) Date of publication of application: 30.11.2011
(73) Proprietor: Sun Chemical Corporation, Parsippany, NJ 07054 (US)
(72) Inventor: MENON, Nandakumar, Parsippany, NJ 07054-1285 (US); STELLMACH, Korey, Parsippany, NJ 07054-1285 (US)
(74) Representative: Vossius & Partner
(86) International application number: PCT/US2010/021982
(87) International publication number: WO 2010/085745

(56) References cited:
- EP-A1- 0 555 069
- WO-A1-02/50186
- WO-A2-99/29787
- US-A1- 2008 274 321

## Description

### BACKGROUND

This disclosure relates to UV-curing printing inks used to print a decorative marking or opaque border on plastic substrates, preferably transparent plastic substrates such as those used in the manufacture of automotive plastic glazing panels.

One relatively new application of transparent plastic materials is automotive window systems. Regulatory requirements in the United States require automotive windows to include some form of identification marking or logo. In addition, many manufacturers find it desirable for the automotive window to include an opaque fade-out border in order to enhance the overall appearance of the installed window. To achieve durability over a period of years, such plastic windows are covered by a coating to provide protection against weathering and scratches/abrasion.

The plastic glazing panel is typically formed by providing a plastic panel, printing an opaque pattern using an ink, curing the ink using UV radiation, applying a weatherability layer on the ink and on the plastic panel, curing the weatherability layer, and depositing an abrasion resistant layer onto the weatherability layer. One such process is described in further detail in US 2008/0274321.

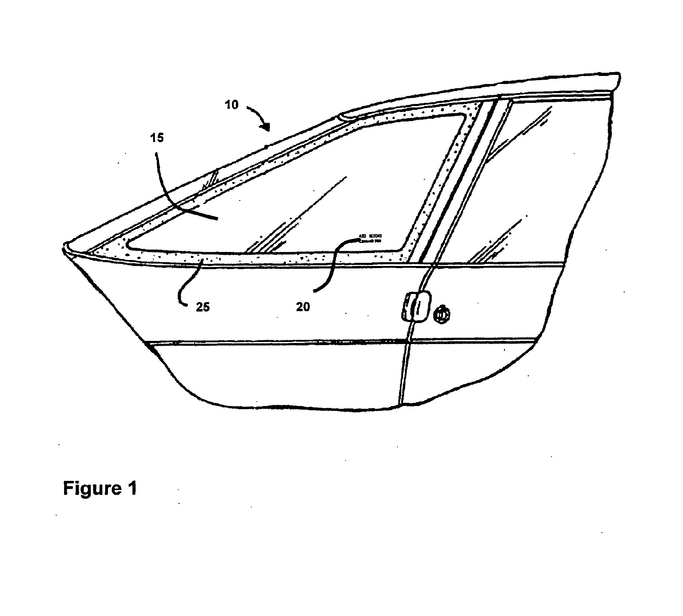

FIG. 1 shows a plastic glazing panel which may be used on an automobile 10, such as, in this embodiment, a movable side window 15. The window 15 is shown with a printed opaque border 25 and logo/regulatory information 20. The plastic glazing panel of the present invention can be used for other automotive windows, such as a backlite, sunroof, and fixed side windows, among others.

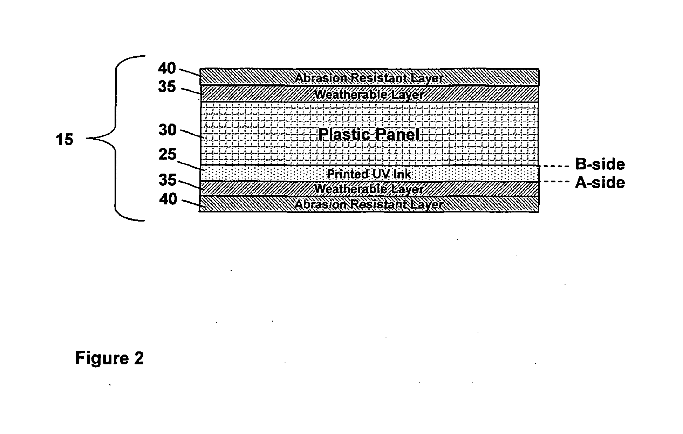

FIG. 2 is a cross-section of a plastic glazing panel according to Fig. 1. The plastic panel 30 may be comprised of any thermoplastic or thermoset polymeric resin. The polymeric resins include, but are not limited to, polycarbonate, acrylic, polyacrylate, polyester, and polysulfone, as well as copolymers and mixtures thereof. In order to function appropriately as a window and to allow for the curing of the printed ink, the plastic panel is substantially transparent.

On one side of the panel 30 in this embodiment, there is a layer of UV ink 25, the layer side abutting the panel being considered the "B" side and the opposite side being considered the "A" side. The panel/ink combination is sandwiched between weatherability layers 35, which, in turn, are sandwiched between abrasion resistant layers 40.

The formulation of inks which provide the required characteristics for this application is not an easy task. In order to effectively mark a plastic window with an identification marking and/or a fade-out border, the inks must not only adhere to the surface of the plastic window, but also must be compatible with the protective coating system that is applied to the window's surface. The ink must not be softened, damaged, or removed during the application of the protective coating system. Also, the automotive industry rigorously test car windows before they will use them in automotive vehicles, and the inks need to be able to survive that rigorous testing.

The use of a UV curable ink to mark a plastic window theoretically offers advantages over thermally cured ink systems. Primarily, a UV ink can increase productivity by decreasing the processing time required to cure the ink. A conventional ink can take anywhere from 15 to 60 minutes to thermally cure, while a UV ink will cure within a matter of seconds. A further improvement in productivity can be obtained by reducing the cycle time required to remove dried ink residue left in the screen during the screen printing of a thermally curable ink which results from the evaporation of the solvent(s) in the thermally curable ink, and often requires removing the screen from the printing operation and replacing it with a new one. This can take upwards of an hour of time. The elimination of this need to replace screens along with the dramatic decrease in time required to cure a UV ink, provides for substantial productivity gains. Other advantages to using UV curable inks includes improved hardness, chemical resistance and scratch resistance properties.

One of the major problems associated with a UV curable ink for use on a transparent plastic glazing panel for an automotive window is that the commercially available UV inks are not compatible with the application of a protective coating system commonly used in the manufacture of plastic glazing panels. The adhesion at the interface between the ink and the coating system or between the ink and the plastic window becomes weaker over time, resulting in premature delamination or micro-cracking of the ink and/or coating system. One contributing factor to the occurrence of this phenomenon is the need for the inks employed for this application to be substantially opaque in nature to provide the desired visual appearance. The opacity, however, interferes with the complete curing of the ink when UV radiation is applied onto the surface of the printed ink, whether from one side of the ink or opposite sides as in US 2008/0274321. Commercially available opaque inks, especially those containing a black pigment, do not adequately cure at suitable opacity required for plastic window applications, namely, a transmission density >3.0 measured using Gretag Macbeth D200-11 spectrophotometer on a single ink layer screen printed through a 305 mesh onto a polycarbonate substrate. The UV radiation either becomes absorbed or is reflected upon interacting with the surface layer of the opaque ink, thereby, reducing or only partially curing the bulk of the ink; especially the ink located near the interface established with the plastic's surface.

To obtain inks having the required transmission density, use is made of carbon black pigments but carbon black can absorb about 95% of the UV radiation which is applied, which is then dissipated as heat, thereby limiting the amount of radiation reaching the UV curable components in the ink. Partially cured UV ink films are known to have inferior functional properties (adhesion, resistance properties, etc.) when compared to fully cured UV ink films. Another problem with commercially available opaque black inks is unacceptable adhesion to the protective coating or glazing system.

Surprisingly, a UV curable ink containing carbon black and which has appropriate opacity and adhesion characteristics and that is compatible with the protective coating systems used in the manufacture of plastic glazing panels, and which can still be cured by UV application has been discovered.

### SUMMARY OF THE INVENTION

The UV curable ink of the present invention comprises a combination of aliphatic urethane (meth)acrylate oligomer and aliphatic (meth)acrylate monomer, photoinitiator, carbon black, an ethylenically unsaturated adhesion promoter, and a multifunctional acrylate hardness promoter, having a viscosity suitable for screen printing, and an opacity (transmission density) after UV curing of greater than 3.0.

### BRIEF DESCRIPTION OF THE DRAWINGS

The drawings described herein are for illustration purposes only and are not intended to limit the scope of the present disclosure in any way.
Figure 1 is a depiction of an automobile incorporating a plastic glazing panel window utilizing the inks of the present invention.
Figure 2 is a diagrammatic representation of a cross-section of a glazing panel from Figure 1 utilizing the inks of the present invention.

### DETAILED DESCRIPTION OF THE INVENTION

The UV curable ink of the present invention can be used to provide a decorative marking and/or opaque border, as typically used in the manufacture of a plastic glazing panel used for automotive windows. It is a UV curable, screen printable, ink, preferably black, having an opacity (transmission density) of greater than 3.0 measured using a Gretag Macbeth D200-11 spectrophotometer on a single ink layer realized by screen printed through a 305 mesh onto a 0.015 polycarbonate substrate. The ink exhibits adequate hardness, chemical resistance, water resistance and adhesion and is receptive to a protective and/or weatherability coating or glazing that is applied to the surface of a plastic window to enhance its durability. The UV ink has excellent adhesion at the interface between the ink and glazing system as well as between the ink and the plastic window.

The inventive UV inks include a mixture of at least one UV curable aliphatic urethane (meth)acrylate oligomer and at least one UV curable aliphatic (meth)acrylate monomer.

The UV curable oligomer contains at least one α,β-unsaturated radiation polymerizable group, which is preferably terminal or pendant, on an oligomeric urethane (meth)acrylate backbone, that is a low molecular weight polymer with a degree of polymerization of less than about 10. Urethane oligomers are those with a urethane bond in the chain. The aliphatic polyether and/or polyester difunctional urethane acrylate oligomers, i.e., where the isocyanate has reacted with a polyester or polyether of a (meth)acrylate, are preferred. Such materials are commercially available. They include, for instance Ebecryl 284 from Cytec Surface Specialties and CN 982, CN 982B10 and CN988 B88 from Sartomer. The concentration of the oligomer in the UV ink is about 40 to 70 %, preferably about 50 to 60 %.

The preferred (meth)acrylate monomers can be mono, di- or higher functional polyacrylates or polymethacrylates. These include isobornyl acrylate; 2-phenylethyl acrylate; 2-(2-ethoxyethoxy)ethyl acrylate; 1,6-hexanediol acrylate or diacrylate; dipropyleneglycol diacrylate; neopentyl glycol diacrylate; tripropylene glycol diacrylate; trimethylpropane triacrylate; pentaerythritol triacrylate; pentaerythritol tetraacrylate; dipentaerythritol pentaacrylate; dipentaerythritol hexaacrylate; dipentaerythritol triacrylate; dipentaerythritol tetraacrylate and their alkoxylated counterparts. The 1,6-hexanediol diacrylate (HDDA) and ethoxylated pentaerythritol tetraacrylate (EOPETA) are especially preferred. The monomer generally is present in an amount of about 1 to 5wt.%, and preferably about 2 to 3wt%.

The hardness, chemical resistance and scratch resistance of the ink are achieved by the incorporation of multifunctional acrylates having four or more acrylate groups. Examples of these hardness promoters include dipentaerythritol tetraacrylate; dipentaerythritol pentaacrylate; dipentaerythritol hexaacrylyate; and their alkoxylated counterparts, preferably ethoxylated pentaerythritol tetraacrylate. The preferred concentration is about 1 to 15 wt. %. More preferred is about 2 to 7 wt. %.

The UV curable ink also includes about 5 to 25 wt.%, preferably about 15 to 20 % of an ethylenically unsaturated adhesion promoter in order to enhance adhesion to the plastic. Suitable promoters include N-vinyl-2-pyrolidone (NVP) and N-vinyl caprolactam.

The UV ink contains a photoinitiator, preferably at least two, and usually three or more photoinitiators. Combination of initiators are used to initiate both surface curing and in depth curing of the ink by the UV light. These photoinitiators can include conventional types used in UV curing printing inks, for example; 1-hydroxycyclohexylacetophenone (Irgacure 184 from Ciba); 2-methyl-1-[4-(methylthiophenyl)-2-morpholinopropane-1 (Irgacure 907 from Ciba); 2-benzyl-2-dimethylamino-1-(4-morpholinophenyl)butan-1-one (Irgacure 369 from Ciba); bis(2,4,6-trimethylbenzoyl)phenylphosphine oxide (Irgacure 819 from Ciba); 2,4,6-trimethylbenzene diphenyl phosphine oxide (TPO from BASF); 2-hydroxy-2-methyl-1-phenyl-1-propanone (Darcur 1173 from Ciba); isopropyl thioxanthone (ITX from Lambson); 2-chlorothioxanthone (CTX from Lambson); and benzophenone. The total quantity of photoinitiators is generally about 1 to 10 wt. %, and preferably about 3 to 7 wt. %.

In addition, co-initiators such as amines (e.g. MDEA, TEA) or amine modified acrylates (e.g. Ebecryl P115, Ebecryl 7100 from Cytec Surface specialties) can also be contained in quantities of up to 15 wt.%, and preferably 1-5 wt.% when present

The inks contain carbon black in an amount sufficient to achieve the desired transmission density after curing. In general, amounts in the range of 5 to 15 %, and preferably about 7 to 10 % are employed. Combination of carbon blacks having different tints can be used.

The UV inks may also contain other pigments and/or dyes. These can be any pigments, e.g. titanium dioxide, zinc sulfide, carbon black, azo diaryl yellow, isonidole yellow, diarylide orange, quinacridone magenta, diketo pyrrolo red, copper phthalocyanine blue or green, dioxazine violet and metal oxides. Special effect pigments such as metal oxide-coated silica and metallic pigments can be used. Suitable dyes include various direct, acidic and basic compounds. The quantity of the other colorant when used is generally 0 to 10 %, and preferably 2-5%, depending on the type of colorant employed. In preferred embodiments, the inks are formulated without such colorants.

The UV ink can also contain one or more conventional inorganic fillers used in printing inks, such as for example china clay, barium sulfate, calcium carbonate, talcum, aluminum silicate, aluminum hydrate and/or silica. The quantity of filler used generally is in the range of 0 to 30 wt. %.

A thickener can also be used in the UV ink and these include pyrogenic silica and laminar silicates. The quantity of thickener used is in the range 0 to 10 wt % preferably 1 to 5 wt. % depending on the function of the type of the filler.

The UV ink may also contain a defoamer and/or a flow control agent, generally in quantity of 0.5 to 3wt.%, preferably 0.5 to 1.5 wt.%.

The ink may also contain slip and mar resistance enhancing materials like waxes (polyethylene, polypropylene and polytetrafluoroethylenene waxes) and silicone compounds.

As with many printing inks, other additives, alone or in combination may be employed, including but not limited to, defoamers, stabilizers, silicones, plasticizers and the like.

The various components of the ink are combined such that the ink has a printable viscosity, preferably a screen printable viscosity. However, the inks can also be modified to a viscosity that is suitable for use with other known printing methods when deemed appropriate. A partial list of other known printing methods include pad printing, membrane image transfer printing, cylindrical printing, digital printing, robotic dispensing, mask/spray, ink-jet printing, and the like. Adjusting the composition to have the desired viscosity is within the skill in this art.

The various components of the ink are combined such that the ink has a transmission density greater than 3 measured using a Gretag Macbeth D200-11 spectrophotometer on a single ink layer screen printed through a 305 mesh onto a polycarbonate substrate and cured using a medium pressure mercury vapor lamp (160 wcm⁻¹). Whether a formulated ink has the desired density or needs adjustment can easily be determined in a few minutes simply by printing the ink on the polycarbonate and curing it:

A preferred utility for the inks of the present invention is for use as a UV curable screen printing ink printed onto the surface of a substantially transparent plastic panel. The transparent plastic panel may be used as an automotive window, sunroof, or transparent body panel.

The inks are used to provide an opaque border and/or decorative marking, which may be defined as a substantially opaque print applied to the plastic panel for decorative purposes, to convey information (e.g., corporate, regulatory, etc.), or to hide or mask other vehicle components (e.g., adhesives). The opaque border may be applied to the periphery of the transparent substrate to form a solid masking border, while a decorative marking may be applied to a portion of the viewing region of the window.

The inks cure upon exposure to UV radiation, preferably in a wavelength range of 200 to 600 nm, such as that found in UV-A (315 - 400 nm), UV-B (280 - 315 nm), or UV-C (<280 nm). Any type of ultraviolet light source known to one skilled in the art may be selected for curing the printed border or marking. Examples of ultraviolet light sources include high, medium, or low pressure mercury lamps, xenon lamps, microwave powered lamps, cold cathode tubes, black lights, UV lasers or excimer lamps, and an ultraviolet LED, among others. A variety of lamps with different spectral outputs is commercially available and may be utilized. Although UV lamps typically use mercury as the principal emission source, other additives or dopants, such as metal halides, fluorescent molecules, and vaporized metals, among others may be utilized to provide modified emission spectra. Examples of various dopants, may include, but not be limited to, cadmium, iron, gallium, indium or lead. One example of a doped lamp exhibiting a consistent output is a microwave powered lamp commercially available from Fusion UV Systems Inc., Gaithersburg, MD having a 300-600 watts/in. power output. In addition, the lamps may utilize various types of reflectors, such as elliptical or parabolic reflectors, to focus the output, particularly when utilized with 3-dimensional panels. In another embodiment, the inventive inks can be made without photoinitiators and cured by electron beam (EB) radiation.

In order to further illustrate the invention, various non-limiting examples are set out below. In these examples, all parts and percentages are by weight and temperatures are in degrees Centigrade unless otherwise indicated.

### EXAMPLES

The following inks were prepared by first premixing the formulation matenals using a high speed mixer and then grinding the resultant mixture on a triple roll mill until a grind of <10 microns (µm) was achieved.

**Commercial Ink 1**

| **Material** | **%** |
|---|---|
| Ebecryl 284 (UCB) - urethane acrylate | 62.25 |
| HDDA monomer | 2.1 |
| NVP | 19.6 |
| UV stabihzer | 0.3 |
| Photoinitiators | 5.9 |
| Carbon Black | 4.75 |
| UV absorber | 2.1 |
| Fumed silica | 1.0 |
| Silicone antifoam | 2.0 |
| **Total** | **100.0** |

**Commercial Ink 2**

| **Material** | **%** |
|---|---|
| Urethane acrylate 1 | 45.3 |
| Urethane acrylate 2 | 10.4 |
| Isobornyl acrylate | 10.4 |
| NVP | 15.0 |
| UV stabilizer | 0.3 |
| Photoinitiators | 7.9 |
| Carbon Black | 4.5 |
| Talc | 5.2 |
| Sihcone antiform | 1.0 |
| **Total** | **100.0** |

**Commercial Ink 3**

| **Material** | % |
|---|---|
| Methacrylate resin | 26.7 |
| NVP | 22.8 |
| Isobornyl acrylate | 30.3 |
| UV stabilizer | 1.1 |
| Photoinitiators | 7.7 |
| Coirutiator | 1.9 |
| Dispersant | 1.0 |
| Carbon Black | 7.0 |
| Sihcone antifoam | 1.5 |
| **Total** | **100.0** |

**Ink 4 (comparative)**

| **Material** | **%** |
|---|---|
| Ebecryl 284 (UCB) - urethane acrylate | 60.5 |
| HDDA monomer | 2.0 |
| NVP | 18.2 |
| Carbon Black | 9.4 |
| Photoinitiator | 4.9 |
| Fumed silica | 1.0 |
| Silicone antifoam | 1.0 |
| Dispersant | 0.4 |
| UV stabilizer | 0.5 |
| UV absorber | 2.0 |
| **Total** | **100.0** |

**Ink 5**

| **Material** | % |
|---|---|
| Ebecryl 284 (UCB) - urethane acrylate | 54.2 |
| HDDA monomer | 2.0 |
| NVP | 17.7 |
| DPPA monomer | 6.3 |
| UV stabilizer | 0.3 |
| Photoinitiator | 7.3 |
| Fumed silica | 0.9 |
| Silicone antifoam | 1.0 |
| Carbon Black | 9.3 |
| UV Absorber | 2.0 |
| **Total** | **100.0** |

**Ink 6**

| **Material** | % |
|---|---|
| Ebecrvl 284 (UCB) - urethane acrylate | 55.0 |
| NVP | 18.5 |
| UV stabilizer | 0.2 |
| HDDA monomer | 2.1 |
| Ethoxylated PETA monomer | 3.8 |
| Photoinitiator | 6.8 |
| Fumed silica | 0.9 |
| Silicone antifoam | 0.8 |
| Carbon Black | 9.2 |
| Dispersant | 0.6 |
| **Total** | **100.0** |

Single layers of the above inks were screen printed through a 305 mesh onto 0.015 thick clear polycarbonate substrate and cured usmg an iron doped medium pressure mercury vapor lamp (160 wcm⁻¹) The prints were visually examined and assessed for adhesion, density, surface hardness, chemical resistance, water resistance and compatibility to the panel glazing process The results of the examination are set out below

| **Table 1- Crosshatch Adhesion ASTM D3359-95** | | |
|---|---|---|
| **Ink system** | **Ranking*** | **Comments** |
| Ink 1 | 4 | Slight removal |
| Ink 2 | 5 | No removal |
| Ink 3 | 5 | No removal |
| Ink 4 | 5 | No removal |
| Ink 5 | 5 | No removal |
| Ink 6 | 5 | No removal |

| | | |
|---|---|---|
| *1 = poor (total ink removal), 5 = excellent (no ink removal) | | |

| **Table 2 - Solvent Resistance ASTM D5402 - 06** | | |
|---|---|---|
| **Ink system** | **Ranking*** | **Comments** |
| Ink 1 | 3 | Fair |
| Ink 2 | 1 | Poor |
| Ink 3 | 1 | Poor |
| Ink 4 | 3 | Fair |
| Ink 5 | 4 | Good |
| Ink 6 | 4-5 | V. Good |

| | | |
|---|---|---|
| *1 = poor (total ink removal); 5 = Excellent (no ink removal) | | |

| Target density is >3 0 | | |
|---|---|---|
| **Table 3 - Transmission Color Density** | | |
| **Ink system** | **Density*** | **Comments** |
| Ink 1 | 2.2 | Below target density |
| Ink 2 | 1.8 | Below target density |
| Ink 3 | 1.7 | Below target density |
| Ink 4 | 2.4 | Below target density |
| Ink 5 | 3.4 | Meets target density |
| Ink 6 | 3.4 | Meets target density |

| | | |
|---|---|---|
| *Transmission density measured using Gretag Macbeth D200-11 spectrophotometer. | | |

| **Table 4 - Water Resistance** | | |
|---|---|---|
| **Ink system** | **Ranking*** | **Comments** |
| Ink 1 | Fail | Shght ink removal (<95% retention) |
| Ink 2 | Fail | Some ink removal (<95% retention) |
| Ink 3 | Fail | Total ink removal (0% retention) |
| Ink 4 | Fail | Some ink removal (<95% retention) |
| Ink 5 | Pass | Shght Ink removal (>95% retention) |
| Ink 6 | Pass | No ink removal (100% retention) |

| | | |
|---|---|---|
| *10 day immersion in water | | |

The water immersion test includes an initial cross-hatch adhesion test (tape pull) according to ASTM D3359-95, followed by submersing the printed plastic glazing panels in distilled water at an elevated temperature of about 65°C for 10 days. The adhesion of the ink was re-tested after 10 days, and the printed ink passes the test only if there is >95% retention of the ink is obtained on the 10^{th} day.

| **Table 4 - Pencil Hardness ASTM D3363** | | |
|---|---|---|
| **Ink system** | **Hardness*** | **Comments** |
| Ink 1 | 7H | Below target |
| Ink 2 | 6H | Below target |
| Ink 3 | 3H | Below target |
| Ink 4 | 5H | Below target |
| Ink 5 | 8H | Below target |
| Ink 6 | 9H+ | Meets target |

| | | |
|---|---|---|
| *Target =>8H | | |

| **Table 5 - Compatibility to the Panel Glazing Process** | |
|---|---|
| **Ink system** | **Comments** |
| Ink 1 | Incompatible |
| Ink 2 | Incompatible |
| Ink 3 | Incompatible |
| Ink 4 | Incompatible |
| Ink 5 | Marginally compatible |
| Ink 6 | Compatible |

Various changes and modifications can be made in the product of the present invention without departing from the spirit and scope thereof. The various embodiments disclosed above were for the purpose of illustration only and were not intended to limit the invention.

## Claims

1. A UV curable ink that comprises:
a combination of aliphatic urethane(meth)acrylate oligomer and aliphatic (meth)acrylate monomer,
a photoinitiator,
carbon black,
an ethylenically unsaturated adhesion promoter, and
a multifunctional acrylate hardness promoter having 4 or more acrylate groups,
wherein the ink has a printing viscosity suitable for screen printing, and the ink has a transmission density after UV curing of greater than 3.0 measured using a spectrophotometer on a single ink layer screen printed through a 305 mesh onto a polycarbonate substrate and cured using a medium pressure mercury vapor lamp (160 Wcm⁻¹),

2. The UV curable ink of claim 1 wherein the transmission density after UV curing is at least 3.2.

3. The UV curable ink of any preceding claim wherein the oligomer is an aliphatic polyether or polyester urethane (meth)acrylate oligomer.

4. The UV curable ink of any preceding claim wherein the amount of multifunctional acrylate hardness promoter is about 2 to 7 wt%.

5. The UV curable ink of any preceding claim wherein the multifunctional acrylate hardness promoter having 4 or more acrylate groups is selected from among dipentaerythritol tetraacrylate, dipentaerythritol pentaacrylate, dipentaerythritol hexaacrylate, and an alkoxylated dipentaerythritol tetraacrylate, an alkoxylated dipentaerythritol pentaacrylate and an alkoxylated dipentaerythritol hexaacrylate.

6. The UV curable ink of any preceding claim wherein the amount of oligomer is about 40 to 70 wt%, the amount of monomer is about 1 to 5 wt%, the amount of photoinitiator is about 1 to 10 wt%, the amount of carbon black is about 5 to 15 wt%, the amount of adhesion promoter is about 5 to 25 wt%, and the amount of hardness promoter is about 1 to 15 wt%.

7. The UV curable ink of any preceding claim wherein the amount of oligomer is about 50 to 60 wt%, the amount of monomer is about 2 to 3 wt% , the amount of photoinitiator is about 3 to 7 wt%, the amount of carbon black is about 7 to 10 wt%, the amount of adhesion promoter is about 15 to 20 wt%, and the amount of multifunctional acrylate hardness promoter is about 2 to 7 wt%.

8. The UV curable ink of any preceding claim further containing a thickener, UV stabilizer and UV absorber.

9. The UV curable ink of any preceding claim containing at least two aliphatic (meth)acrylate monomers.

10. The UV curable ink of any preceding claim containing 1,6-hexanediol diacrylate and ethoxylated pentaerythritol tetraacrylate.

## Patentansprüche

1. Eine UV-härtbare Tinte, die umfasst:
eine Kombination eines aliphatischen Urethan-(Meth)Acrylat-Oligomers und eines aliphatischen (Meth)Acrylat-Monomers,
einen Photoinitiator,
Ruß,
einen ethylenisch ungesättigten Haftvermittler, und
einen multifunktionellen Acrylat-Härtepromotor mit 4 oder mehr Acrylatgruppen, wobei die Tinte eine Druckviskosität aufweist, die für Siebdruck geeignet ist, und die Tinte nach UV-Härtung eine Transmissionsdichte von mehr als 3,0 aufweist, gemessen mittels eines Spektrophotometers an einer Einzeltintenschicht, die durch eine Maschenweite 305 auf einen Polycarbonatträger siebgedruckt und mittels einer Mitteldruck-Quecksilberdampflampe (160 Wcm⁻¹) gehärtet ist.

2. Die UV-härtbare Tinte nach Anspruch 1, wobei die Transmissionsdichte nach UV-Härtung mindestens 3,2 beträgt.

3. Die UV-härtbare Tinte nach einem der vorangehenden Ansprüche, wobei das Oligomer ein Oligomer eines aliphatischen Polyether- oder Polyester-Urethan-(Meth)Acrylats ist.

4. Die UV-härtbare Tinte nach einem der vorangehenden Ansprüche, wobei die Menge an multifunktionellem Acrylat-Härtepromotor etwa 2 bis 7 Gew.-% beträgt.

5. Die UV-härtbare Tinte nach einem der vorangehenden Ansprüche, wobei der multifunktionelle Acrylat-Härtepromotor mit 4 oder mehr Acrylatgruppen ausgewählt ist aus Dipentaerythritoltetraacrylat, Dipentaerythritolpentaacrylat, Dipentaerythritolhexaacrylat und einem alkoxylierten Dipentaerythritoltetraacrylat, einem alkoxylierten Dipentaerythritolpentaacrylat und einem alkoxylierten Dipentaerythritolhexaacrylat.

6. Die UV-härtbare Tinte nach einem der vorangehenden Ansprüche, wobei die Menge an Oligomer etwa 40 bis 70 Gew.%, die Menge an Monomer etwa 1 bis 5 Gew.%, die Menge an Photoinitiator etwa 1 bis 10 Gew.%, die Menge an Ruß etwa 5 bis 15 Gew.%, die Menge an Haftvermittler etwa 5 bis 25 Gew.% und die Menge an Härtepromotor etwa 1 bis 15 Gew.% beträgt.

7. Die UV-härtbare Tinte nach einem der vorangehenden Ansprüche, wobei die Menge an Oligomer etwa 50 bis 60 Gew.%, die Menge an Monomer etwa 2 bis 3 Gew.%, die Menge an Photoinitiator etwa 3 bis 7 Gew.%, die Menge an Ruß etwa 7 bis 10 Gew.%, die Menge an Haftvermittler etwa 15 bis 20 Gew.% und die Menge an multifunktionellem Acrylat-Härtepromotor etwa 2 bis 7 Gew.% beträgt.

8. Die UV-härtbare Tinte nach einem der vorangehenden Ansprüche, die darüber hinaus ein Verdickungsmittel, einen UV-Stabilisator und einen UV-Absorber enthält.

9. Die UV-härtbare Tinte nach einem der vorangehenden Ansprüche, die mindestens zwei aliphatische (Meth)Acrylatmonomere enthält.

10. Die UV-härtbare Tinte nach einem der vorangehenden Ansprüche, die 1,6-Hexandioldiacrylat und ethoxyliertes Pentaerythritoltetraacrylat enthält.

## Revendications

1. Encre durcissable aux UV, qui comprend :
une combinaison d'un oligomère de (méth)acrylate d'uréthane aliphatique et d'un monomère de (méth)acrylate aliphatique,
un photoinitiateur,
du noir de carbone,
un promoteur d'adhérence à insaturation éthylénique, et
un promoteur de durcissement acrylate multifonctionnel ayant 4 groupes acrylate ou plus, dans laquelle l'encre a une viscosité d'impression appropriée pour la sérigraphie, et l'encre a une densité de transmission après le durcissement UV de plus de 3,0, mesurée en utilisant un spectrophotomètre sur une couche d'encre unique sérigraphiée à travers une maille 305 sur un substrat de polycarbonate et durcie en utilisant une lampe à vapeur de mercure moyenne pression (160 Wcm⁻¹).

2. Encre durcissable aux UV selon la revendication 1, dans laquelle la densité de transmission après le durcissement UV est d'au moins 3,2.

3. Encre durcissable aux UV selon l'une quelconque des revendications précédentes, dans laquelle l'oligomère est un oligomère de (méth)acrylate d'uréthane de polyester ou polyéther aliphatique.

4. Encre durcissable aux UV selon l'une quelconque des revendications précédentes, dans laquelle la quantité de promoteur de durcissement acrylate multifonctionnel est d'environ 2 à 7 % en poids.

5. Encre durcissable aux UV selon l'une quelconque des revendications précédentes, dans laquelle le promoteur de durcissement acrylate multifonctionnel ayant 4 groupes acrylate ou plus est choisi parmi le tétraacrylate de dipentaérythritol, le pentaacrylate de dipentaérythritol, l'hexaacrylate de dipentaérythritol, et un tétraacrylate de dipentaérythritol alcoxylé, un pentaacrylate de dipentaérythritol alcoxylé et un hexaacrylate de dipentaérythritol alcoxylé.

6. Encre durcissable aux UV selon l'une quelconque des revendications précédentes, dans laquelle la quantité d'oligomère est d'environ 40 à 70 % en poids, la quantité de monomère est d'environ 1 à 5 % en poids, la quantité de photoinitiateur est d'environ 1 à 10 % en poids, la quantité de noir de carbone est d'environ 5 à 15 % en poids, la quantité de promoteur d'adhérence est d'environ 5 à 25 % en poids et la quantité de promoteur de durcissement est d'environ 1 à 15 % en poids.

7. Encre durcissable aux UV selon l'une quelconque des revendications précédentes, dans laquelle la quantité d'oligomère est d'environ 50 à 60 % en poids, la quantité de monomère est d'environ 2 à 3 % en poids, la quantité de photoinitiateur est d'environ 3 à 7 % en poids, la quantité de noir de carbone est d'environ 7 à 10 % en poids, la quantité de promoteur d'adhérence est d'environ 15 à 20 % en poids et la quantité de promoteur de dureté est d'environ 2 à 7 % en poids.

8. Encre durcissable aux UV selon l'une quelconque des revendications précédentes, contenant en outre un épaississant, un agent stabilisateur anti-UV et un absorbeur d'UV.

9. Encre durcissable aux UV selon l'une quelconque des revendications précédentes, contenant au moins deux monomères de (méth)acrylate aliphatique.

10. Encre durcissable aux UV selon l'une quelconque des revendications précédentes, contenant du diacrylate de 1,6-hexanediol et du tétraacrylate de pentaérythritol éthoxylé.
